(19) Europäisches Patentamt
European Patent Office
Office européen des brevets

(11) **EP 3 839 828 A1**

(12) **EUROPEAN PATENT APPLICATION**

(43) Date of publication:
**23.06.2021 Bulletin 2021/25**

(51) Int Cl.:
**G06N 3/00** (2006.01)    **G06N 3/04** (2006.01)
**G06N 3/08** (2006.01)

(21) Application number: **19218351.5**

(22) Date of filing: **19.12.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(71) Applicant: **Secondmind Limited**
**Cambridge, Cambridgeshire CB2 1LA (GB)**

(72) Inventors:
• **TOMCZAK, Marcin**
  **Cambridge, Cambridgeshire CB2 1LA (GB)**
• **VRANCX, Peter**
  **Cambridge, Cambridgeshire CB2 1LA (GB)**

(74) Representative: **EIP**
**Fairfax House**
**15 Fulwood Place**
**London WC1V 6HU (GB)**

(54) **REINFORCEMENT LEARNING SYSTEM**

(57)    A reinforcement learning system includes an agent arranged to generate empirical state transition data indicative of observed changes of state of an environment induced by actions determined by the agent in accordance with a policy, and a state transition simulator arranged to generate, using a state transition model, simulated state transition data indicative of simulated changes of state of the environment on the basis of actions determined in accordance with the policy. The reinforcement learning system further includes a policy learner arranged to: determine a policy update which, when used to update the policy, increases an objective function comprising a weighted sum of two components, the first component corresponding to a value of the updated policy as estimated using the empirical state transition data, and the second component corresponding to a value of the updated policy as estimated using the simulated state transition data; and update the policy in accordance with the determined policy update.

Fig. 3

EP 3 839 828 A1

**Description**

Technical Field

The present invention relates to reinforcement learning systems. The invention has particular, but not exclusive, relevance to reinforcement learning systems in which an agent interacts with a physical environment using physical sensors and actuators.

Background

Reinforcement learning describes a class of machine learning methods in which a computer-implemented learner aims to determine how a task should be performed by observing an agent interacting with an environment. In a canonical reinforcement learning setting, the agent observes a first state of the environment, determines an action on the basis of the observation and a given policy, and following the performance of the action, observes a second state of the environment and receives a reward. The agent repeats this process to generate sequences of state transitions, and collects experience data indicative of the resulting trajectory of state observations and actions, along with the associated rewards received by the agent. The goal of the learner is to update the policy of the agent to maximise the value of the policy, where the value may be defined as an expected discounted future reward, as shown by Equation (1):

$$\eta(\pi) = \mathop{\mathbb{E}}_{\tau \sim \pi} \sum_{t \geq 0} \gamma^t r(s_t, a_t), \qquad\qquad (1)$$

in which: $\eta(\pi)$ is the value of the policy $\pi$; $\tau = (s_0, a_0, s_1, a_1, ...)$ is a trajectory of state observations and actions induced by the agent following the policy $\pi$; $\gamma \in (0,1)$ is a discount factor which ensures convergence of the sum in Equation (1) and affects how much an agent should take into account likely future states when making decisions; and $r(s_t, a_t)$ is a reward received by the agent following the performance of an action $a_t$ in response to a state observation $s_t$. In some cases, a reinforcement learning task may be episodic, meaning that the agent interacts with the environment over multiple episodes each containing a finite number of state transitions. In other cases, a reinforcement learning task may be ongoing, with the agent continuing to interact with the environment indefinitely.

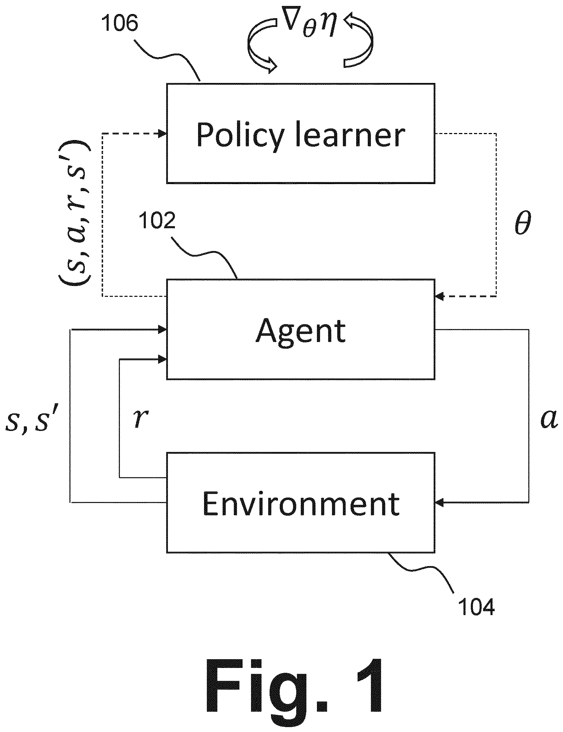

Figure 1 illustrates a reinforcement learning loop in which an agent 102 makes a first observation s indicating a first state of an environment 104 and selects an action a in dependence on the first state observation s and a policy $\pi$ parameterised by $\theta$. Following the performance of the action, the agent makes a second observation s' indicating a second state of the environment 104 and receives a reward r. The agent 102 sends state transition data to a policy learner 106 indicative of the sequence (s,a,r(s,a),s'). The policy learner 106 processes the state transition data, along with other state transition data, to determine an updated set up values for the parameters $\theta$, and sends these values to the agent 102. The policy of the agent 102 is updated on the basis of the updated values of the parameters. Once the policy has been updated, the agent 102 begins to interact with the environment 104 using the updated policy, resulting in new state transition data, a further policy update, and so on. The updating of the policy is generally asynchronous with the interactions between the agent 102 and the environment 104, and typically many such interactions will take place before the policy learner 106 updates the policy.

In some reinforcement learning algorithms, entire trajectories are used to determine unbiased stochastic estimators of the expectation in Equation (1). In other algorithms, state transitions (s,a,r,s') are sampled randomly to determine estimators of the expectation. In order for any such algorithm to be applicable, the policy value of Equation (1) can be rewritten as shown in Equation (2):

$$\eta(\pi) = \frac{1}{(1-\gamma)} \mathop{\mathbb{E}}_{s \sim d^{\pi,p}, a \sim \pi(\cdot|s)} r(s, a), \qquad\qquad (2)$$

in which the normalised discounted state occupancy measure $d^{\pi,p}$ is proportional to the distribution of states encountered whilst navigating the environment using the policy $\pi$, and is defined as shown in Equation (3):

$$d^{\pi,p} := (1-\gamma) \sum_{t \geq 0} \gamma^t P_\pi^t \rho_0 = (1-\gamma)(1-\gamma P_\pi)^{-1} \rho_0, \tag{3}$$

where $\rho_0$ is an initial distribution over state observations and $P_\pi$ is a state transition operator, defined such that $P_\pi(s,s')$ is the probability of the state observation $s'$ following the state observation s, assuming the agent selects actions in accordance with the policy $\pi$, i.e. $P_\pi(s,s') = p(s'|s) = \int p(s'|s,a)\pi(a|s)da$. In practice, the initial distribution $\rho_0$ and the probability $p(s'|s,a)$ of given action inducing a given state transition in the environment are unknown. However, the expectation over states and actions in Equation (2) can be estimated by sampling state transitions observed by the agent.

It is known that the change in policy value induced by a policy update from an initial policy $\pi$ to an updated policy $\tilde{\pi}$ is approximately given by Equation (4):

$$\eta(\tilde{\pi}) - \eta(\pi) \approx L^{\pi,p}(\tilde{\pi}) := \frac{1}{(1-\gamma)} \mathop{\mathbb{E}}_{s \sim d^{\pi,p}, a \sim \pi(\cdot|s)} \left[ \frac{\tilde{\pi}(a|s)}{\pi(a|s)} A^{\pi,p}(s,a) \right], \tag{4}$$

where $A^{\pi,p}(s,a)$ is the advantage function of the state-action pair $(s,a)$ under the policy $\pi$, assuming state transition probabilities denoted by $p$. The advantage function is defined as the difference between the state-action value $Q^{\pi,p}(s,a)$ (the expected discounted future reward for the state-action pair) and the state value $V^{\pi,p}(s)$ (the expected discounted future reward for the state of the state-action pair). The advantage function can be estimated using a variety of known methods, for example using a generalised advantage estimation (GAE) critic, as described in the article "High Dimensional Continuous Control using Generalized Advantage Estimation" by Schulman et al, ICLR 2016.

The objective function $L^{\pi,p}(\tilde{\pi})$ is intractable, but a stochastic estimator for $L^{\pi,p}(\tilde{\pi})$ (along with its gradient) can be determined by sampling state transitions generated by an agent performing actions in accordance with the policy $\pi$. The objective function, and hence the value of the updated policy $\tilde{\pi}$, can be maximised (within certain constraints) using a gradient-based optimisation method, for example stochastic gradient descent, the nonlinear conjugate gradient method, or a variant of these. New trajectories can be generated by the agent following the updated policy $\pi$, from which a further policy update can be determined, and so on. In this way, the policy of the agent is iteratively improved, either indefinitely or until a predetermined stopping condition is satisfied. Methods which update policies on the basis of an approximate policy value such as that of Equation (4) are referred to as approximate policy iteration methods, due to the use of an approximate objective function as a surrogate for the true policy value.

An issue with the method described above is that a large number of state transitions are required in order to determine a stochastic estimator for Equation (4) with low enough variance to result in favourable policy updates. This, in turn, requires a large number of interactions between the agent and the environment. In cases where such interactions are resource-intensive, inherently infrequent, or otherwise limited (as is typically the case for agents interacting with physical environments), the method described above can become impracticable.

As an alternative to the method described above, model-based reinforcement learning methods have been developed in which a state transition model is used to simulate state transitions of an environment. Specifically, the state transition model is a probabilistic model configured to receive data indicative of an initial state of the environment and an action, and to generate data indicative of an expected subsequent state of the environment. An agent can thus interact with the state transition model, instead of the environment itself, to generate data for use in determining policy updates, allowing for low variance updates of the policy whilst avoiding the need for large numbers of interactions between the agent and the environment. The interactions between the agent and the state transition model are not constrained by the same limitations (for example, physical limitations) as those between the agent and the environment, and can therefore be performed at a much higher rate and lower resource cost than interactions between the agent and the environment. However, because the state transition model only approximates state transition probabilities of the environment, the simulated state transitions generated using the state transition model introduce bias to the policy updates, potentially resulting in suboptimal policies.

## Summary

According to a first aspect of the present invention, there is provided a reinforcement learning system including an agent arranged to generate empirical state transition data indicative of observed changes of state of an environment induced by actions determined by the agent in accordance with a policy, and a state transition simulator arranged to generate, using a state transition model, simulated state transition data indicative of simulated changes of state of the environment on the basis of actions determined in accordance with the policy. The reinforcement learning system further includes a policy learner arranged to: determine a policy update which, when used to update the policy, increases an objective function comprising a weighted sum of two components, the first component corresponding to a value of the updated policy as estimated using the empirical state transition data, and the second component corresponding to a value of the updated policy as estimated using the simulated state transition data; and update the policy in accordance with the determined policy update.

By determining a policy based on an objective function which is a weighted sum of components depending respectively on empirical state transition data and simulated state transition data, the variance of policy updates can be decreased whilst mitigating the detrimental effect of bias introduced by the state transition model. In this way, data efficiency can be improved such that a converged policy is reached using fewer interactions between the agent and the environment, whilst limiting the detrimental effect of using simulated data on the quality of the converged policy.

Further features and advantages of the invention will become apparent from the following description of preferred embodiments of the invention, given by way of example only, which is made with reference to the accompanying drawings.

Brief Description of the Drawings

Figure 1 is a schematic block diagram illustrating a canonical reinforcement learning loop.
Figure 2 is a schematic block diagram showing a reinforcement learning system in accordance with an embodiment of the present invention.
Figure 3 is schematic block diagram illustrating an example of a reinforcement learning loop performed by the system of Figure 2.
Figure 4 is schematic block diagram illustrating a further example of a reinforcement learning loop performed by the system of Figure 2.
Figure 5 shows learning curves resulting from a numerical experiment.
Figure 6 shows learning curves resulting from a further numerical experiment.
Figure 7 is a graph illustrating a trade-off between bias and variance as a weighting parameter is varied in accordance with an embodiment of the present invention.

Detailed Description

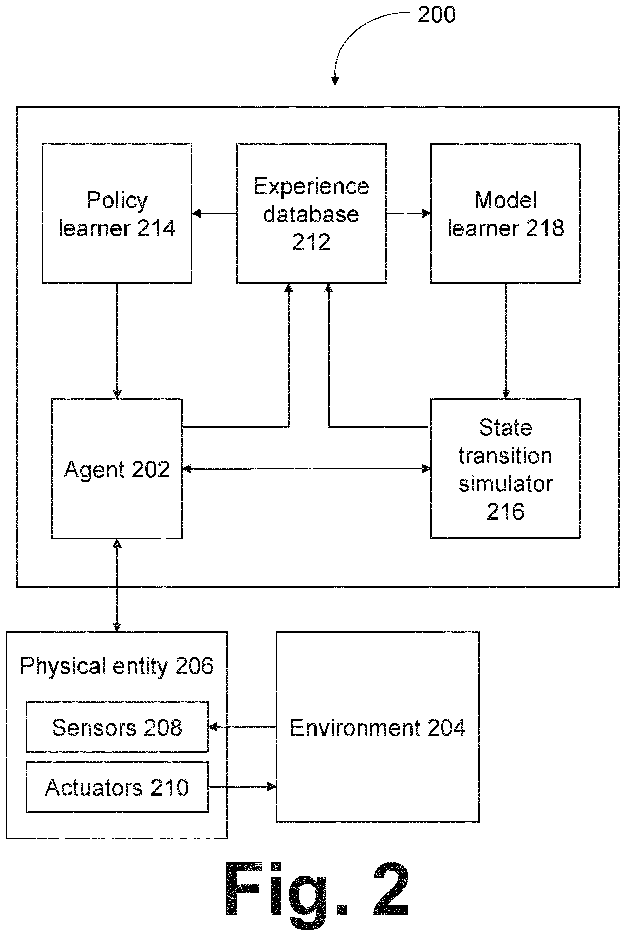

Figure 2 shows an example of a reinforcement learning system 200 arranged in accordance with an embodiment of the present invention. The reinforcement learning system 200 includes an agent 202, which is a software component arranged to receive state observation data indicative of observations of states of an environment 204, and to determine actions to be performed on the basis of the state observation data and a given policy. In the present example, the policy is a stochastic mapping from state observations to actions. The policy may be implemented using any suitable method known in the art, for example using a neural network. In order to be processed by components of the reinforcement learning system 200, state observations and action are represented by vectors, i.e. $s \in \mathbb{R}^m, \quad a \in \mathbb{R}^n$ for $m, n \in \mathbb{Z}^+$.

In the present example, the environment 204 is a physical environment, and the agent 202 receives the state observation data from a physical entity 206 having one or more physical sensors 208 arranged to determine one or more characteristics of the environment 204. In this example, the state observation data received by the agent 202 contains only a partial description of the corresponding state of the environment 204, and may furthermore be corrupted by sensor noise or other sources of inaccuracy. In other examples, an environment is virtual, in which case state observation data may contain a complete description of the state of the environment. The agent 202 sends control signals to the entity 206 indicating actions determined in accordance with the policy, and the entity 206 performs the indicated actions using one or more actuators 210.

The agent 202 interacts with the environment 204 by receiving first state observation data from the entity 206 indicating an observation of a first state of the environment 204, and determining an action in dependence on the first state observation data in accordance with the policy. The entity 206 performs the determined action, which changes the state of the environment 204 from the first state to a second state. Following the performance of the action, the agent 202 receives second state observation data from the entity 206 indicating an observation of the second state of the environment, along with a reward. The reward is a numerical value that may be positive or negative. In some examples, the reward is computed on the basis of the second state observation data. In other examples, the reward is an intrinsic reward, for example corresponding to a financial reward or any other quantifiable resource. The agent 202 generates empirical state transition data including the first state observation data, the second state observation data, and further indicating the performed action. In other words, the empirical state transition data is indicative of the observed change of state of the environment induced by the action determined by the agent.

The empirical state transition data is stored in an experience database 212 along with other empirical state transition data and empirical reward data indicating the corresponding rewards received by the agent 202. In the present example, the sending of the empirical state transition data and the empirical reward data to the experience database 212 is asynchronous with the generating of the empirical state transition data and the empirical reward data, allowing for efficient use of bandwidth within the reinforcement learning system 200 by sending the empirical state transition data in packets of optimal or near optimal size.

The reinforcement learning system 200 includes a policy learner 214, which is arranged to process state transition data and reward data stored in the experience database 212 in order to determine policy updates for the agent 202. The goal of the policy learner 214 is to determine a policy update which maximises the value of the policy, for example as defined by Equation (1).

The reinforcement learning system 200 further includes a state transition simulator 216, which is arranged to generate simulated changes of state of the environment 204 on the basis of given actions. The state transition simulator 216 generates the simulated changes of state using a state transition model. In the present example, the state transition model is a stochastic model implemented using an ensemble of neural networks parameterised by a set of parameters $\phi$. The values of the parameters are learned from data, as will be described in more detail hereafter. In other examples, a state transition model may be stochastic or deterministic, and may be implemented using any suitable method known in the art, for example using one or more neural networks, Gaussian processes, or the like. A state transition model may for example be a physics-based model, a data-driven model, or a combination of both.

The agent 202 interacts with the state transition simulator 216 by receiving state observation data, determining an action on the basis of the state observation data and the policy, and sending action data to the state transition simulator 216 indicating the determined action. The state transition simulator 216 processes the state observation data and the action data using the state transition model to determine a simulated change of state of the environment 204, and generates simulated state observation data indicating the resulting state. The agent 202 may then determine a further action on the basis of the simulated state data and the policy, receive further simulated state observation data, and so on. In this way, simulated trajectories or rollouts are generated by the agent 202 and the state transition simulator 216, including sequences of simulated state transitions of the form $(\hat{s}, \hat{a}, \hat{s})$, where the hats indicate simulated state transition data resulting from interactions between the agent 202 and the state transition simulator 216, as opposed to empirical state transition data resulting from interactions between the agent 202 and the environment 204. Generating simulated state transition data in this way is typically significantly quicker and less resource-intensive than generating an equivalent volume of empirical state transition data.

The simulated state transition data is stored in the experience database 212 along with the empirical state transition data. In the present example, metadata is used to distinguish the simulated state transition data from the empirical state transition data. In other examples, different memory regions may be used to store simulated state transition data and empirical state transition data separately. In either of these ways, the policy learner 214 is able to distinguish between simulated state transition data and empirical state transition data.

The policy learner 214 is arranged to determine a policy update using both empirical state transition data and simulated state transition data. More specifically, the policy learner 214 determines a policy update which, when applied to the policy, increases an objective function comprising a weighted sum of components, the first corresponding to a value of the policy estimated using the empirical state transition data and the second corresponding to a value of the policy estimated using the simulated state transition data. More specifically, the policy learner 214 determines stochastic gradient estimates of the objective function with respect to the parameters $\theta$ of the policy, and determines the policy update on the basis of the stochastic gradient estimates, for example by maximising the value of the objective function within given constraints or by performing a predetermined number of stochastic gradient steps to increase the objective function. In the present example, the objective function $J_\pi^\alpha(\tilde{\pi})$ is given by a convex combination of two components as shown by Equation (5):

$$J_\pi^\alpha(\tilde{\pi}) = (1 - \alpha)L^{\pi,p}(\tilde{\pi}) + \alpha L^{\pi,\hat{p}}(\tilde{\pi}), \qquad (5)$$

where: $L^{\pi,p}(\tilde{\pi})$ is the first component of the objective function, which corresponds to an increase in the value of the policy when updating the policy $\pi$ to an updated policy $\tilde{\pi}$, as estimated using the empirical state transition data; and $L^{\pi,\hat{p}}(\tilde{\pi})$ is the second component of the objective function, which corresponds to an increase in the value of the policy when updating the policy $\pi$ to the updated policy $\tilde{\pi}$, as estimated using the simulated state transition data. The parameter $\alpha \in (0,1)$ controls the weighting of the two components of the objective function. In the notation of Equation (5), $p$ denotes (unknown) state transition probabilities for the environment 204, whereas $\hat{p}$ denotes simulated state transition probabilities determined using the state transition model.

The two components $L^{\pi,P}(\tilde{\pi})$ and $L^{\pi,\hat{P}}(\tilde{\pi})$ of the objective function $J^{\alpha}_{\pi}(\tilde{\pi})$ each approximate the expected increase in policy value $\eta(\tilde{\pi})$ - $\eta(\pi)$ resulting from the update. In the present example, the first component $L^{\pi,P}(\tilde{\pi})$ is given by Equation (4), and due to the expectation being under the state occupancy $d^{\pi,P}$, can be estimated by sampling the empirical state transition data. The second component is given by Equation (6):

$$L^{\pi,\hat{P}}(\tilde{\pi}) := \frac{1}{(1-\gamma)} \mathbb{E}_{s\sim d^{\pi,\hat{P}},a\sim\pi(\cdot|s)} \left[ \frac{\tilde{\pi}(a|s)}{\pi(a|s)} A^{\pi,P}(s,a) \right], \tag{6}$$

which differs from Equation (4) in that the normalised discounted state occupancy measure $d^{\pi,P}$ is replaced by a modified normalised discounted state occupancy measure $d^{\pi,\hat{P}}$, which is proportional to the distribution of states encountered on simulated state trajectories using the policy $\pi$. The modified measure $d^{\pi,\hat{P}}$ is defined in the same way as $d^{\pi,P}$, but with the state transition operator $P_{\pi}$ replaced with a simulated state transition operator $\hat{P}_{\pi}$ defined such that $\hat{P}_{\pi}(s,s')$ is the probability of the state observation s' following the state observation s in a simulated trajectory generated by the agent 202 and the state transition simulator 216, assuming the agent selects actions in accordance with the policy $\pi$, i.e. $\hat{P}_{\pi}(s,s')$ = $\hat{p}(s'|s)$ = $\int \hat{p}(s'|s,a)\pi(a|s)da$. The appearance of the modified measure $d^{\pi,\hat{P}}$ in the expectation of Equation (6) means that the component $L^{\pi,\hat{P}}(\tilde{\pi})$ can be estimated using samples from the simulated state transition data.

It is noted that whilst the component $L^{\pi,\hat{P}}(\tilde{\pi})$ depends on the modified state occupancy measure corresponding to the simulated state transition data, in the present example the advantage function $A^{\pi,P}(s,a)$ appearing in both components $L^{\pi,P}(\tilde{\pi})$ and $L^{\pi,\hat{P}}(\tilde{\pi})$ is estimated using empirical reward data. The second component is therefore a hybrid estimator in which the modified state occupancy is accounted for by sampling simulated state transition data, but the advantage function is nonetheless calculated using empirical rewards. In other examples, a state transition model is further used to generate simulated reward data for use in estimating the second component of the objective function. However, using empirical rewards for both components mitigates the bias introduced by using simulated state transitions.

The introduction of the modified state occupancy measure $d^{\pi,\hat{P}}$ results in the second component $L^{\pi,\hat{P}}(\tilde{\pi})$ being a more biased estimate of the expected increase in value $\eta(\tilde{\pi})$ - $\eta(\pi)$ than the first component $L^{\pi,P}(\tilde{\pi})$. However, because the second component $L^{\pi,\hat{P}}(\tilde{\pi})$ is estimated using simulated state transition data as opposed to empirical state transition data, the number of transitions available to estimate $L^{\pi,\hat{P}}(\tilde{\pi})$ can be much higher and therefore the variance of the estimate can be much lower. By combining the two components as shown in Equation (5), the overall variance of the updates can therefore be reduced compared with using only empirical state transition data, whilst the level of bias introduced by using an approximate state transition model can be controlled by the parameter $\alpha$. In other words, the parameter $\alpha$ controls a trade-off between variance and bias.

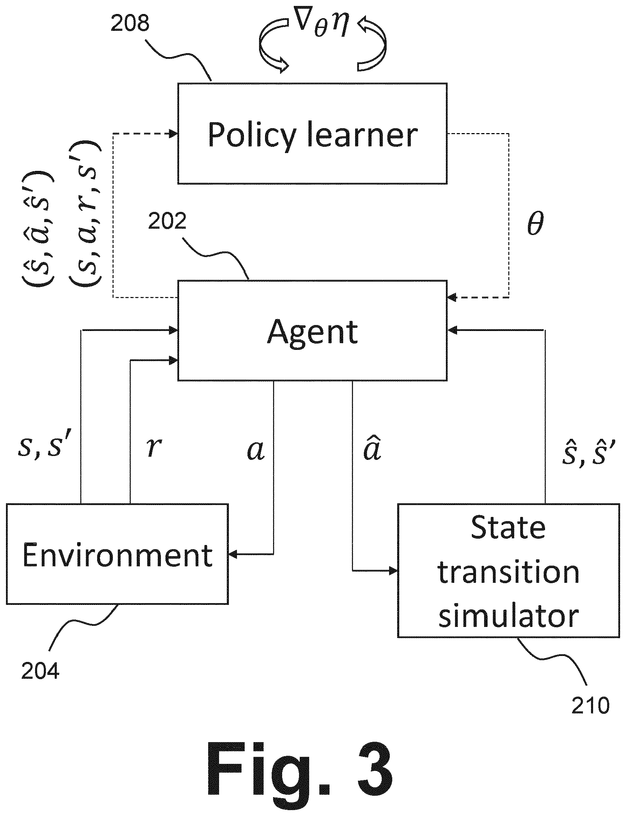

Figure 3 illustrates an example of a reinforcement learning loop performed by the reinforcement learning system 200. The agent 202 interacts with the environment 204 as described above to generate empirical state transition data and empirical reward data indicating sequences of state transitions and rewards of the form $(s,a,r(s,a),s')$. The agent 202 further interacts with the state transition simulator 216 to generate simulated state transition data indicating sequences of simulated state transitions of the form $(\hat{s},\hat{a},\hat{s}')$ referred to as rollouts. The generating of simulated state transition data is asynchronous with the generating of empirical state transition data, and may take place at a much higher rate, for the reasons explained above. In some examples, a rollout begins with an empirical observation of a state of the environment 204. In other examples, a rollout consists entirely of simulated state observations.

The policy learner 214 processes the empirical state transition data, the empirical reward data, and the simulated state transition data as described above to determine a policy update. The policy learner 214 thus determines an updated set of values for the parameters $\theta$, and sends these to the agent 202. Once the policy has been updated, the agent 202 begins to interact with the environment 204 and the state transition simulator 216 using the updated policy, resulting in new empirical state transition data, new empirical reward data, and new simulated state transition data, which are then processed to determine a further policy update, and so on. The updating of the policy is generally asynchronous with the interactions between the agent 202 and the environment 204, and between the agent 202 and the state transition simulator 216. Typically, many such interactions will take place before the policy learner 214 updates the policy. In a specific example, the policy update is regularised using the Kullback-Leibler divergence between the current policy $\pi$ and the updated policy $\tilde{\pi}$, which constrains the updated policy $\tilde{\pi}$ to be within a trust region around the current policy $\pi$.

It is noted that, whilst in the present example, the agent 202 interacts with both the environment 204 and the state transition simulator 216, in other examples a state transition simulator may interact with a separate instance of the agent (i.e. implemented using separate processing circuitry). This alternative arrangement is more efficient if, for example, the state transition simulator is remote from the first instance of the agent.

Returning to Figure 2, the reinforcement learning system 200 includes a model learner 218. The model learner 218 is arranged to process empirical state transition data to update the state transition model. In the present example, the model learner 218 performs supervised learning to update the state transition model. More specifically, for empirical state transitions ($s,a,s'$) each consisting of a first state observation, an action, and a second state observation, the state transition simulator 216 uses the state transition model to generate corresponding simulated state transitions ($s,a,\hat{s}'$) using the same respective first state observations and actions, where $\hat{s}'$ is a predicted second state observation. The model learner 218 compares the empirical second state observations $s'$ with the corresponding predicted second state observations $\hat{s}'$ and updates the state transition model to reduce a prediction error associated with the comparison. In the present example, the prediction error is an $L_2$ prediction error as given by Equation (7):

$$E_{\hat{p}} = \frac{1}{|D|} \sum_{(s,a,s') \in D} \| s' - \hat{s}' \|_2^2, \tag{7}$$

where $D$ is a dataset including state transitions ($s,a,s'$) stored in the experience database 212 and $\|\cdot\|_2$ denotes the $L_2$ norm. In the present example, the dataset $D$ includes all state transitions stored in the experience database 212. In other examples, the dataset $D$ includes only transitions gathered using the current policy. In the present example, the prediction error of Equation (7) is minimised using stochastic gradient descent or a variant thereof.

Updating the state transition model as described above improves the predictive accuracy of the state transition model, thus reducing the bias of policy updates determined using the state transition simulator 216. In some examples, the model learner 218 updates the state transition model alongside the learning of the policy by the policy learner 212. Each update of the state transition model reduces the bias in the second component $L^{\pi,\hat{p}}(\tilde{\pi})$ of the objective function $J^{\alpha}_{\pi}(\tilde{\pi})$ for subsequent policy updates. After the state transition model has been updated, in some examples the policy learner 214 updates the value of the weighting parameter $\alpha$ to account for the reduced bias attributable to the second component. For example, the value of $\alpha$ may be increased for subsequent policy updates, such that a higher proportion of the objective function is estimated using simulated state transition data. By performing this process iteratively, the proportion of state transition data which is simulated as opposed to empirical increases as the accuracy of the state transition model increases, resulting in reduced variance of the gradient estimates, whilst mitigating the effect of bias when the state transition model is relatively untrained. In some examples, the weighting of the two components is varied according to a fixed schedule. In other examples, the weighting of the two components is updated when predetermined conditions are met, for example when a prediction error associated with the model falls below a given threshold.

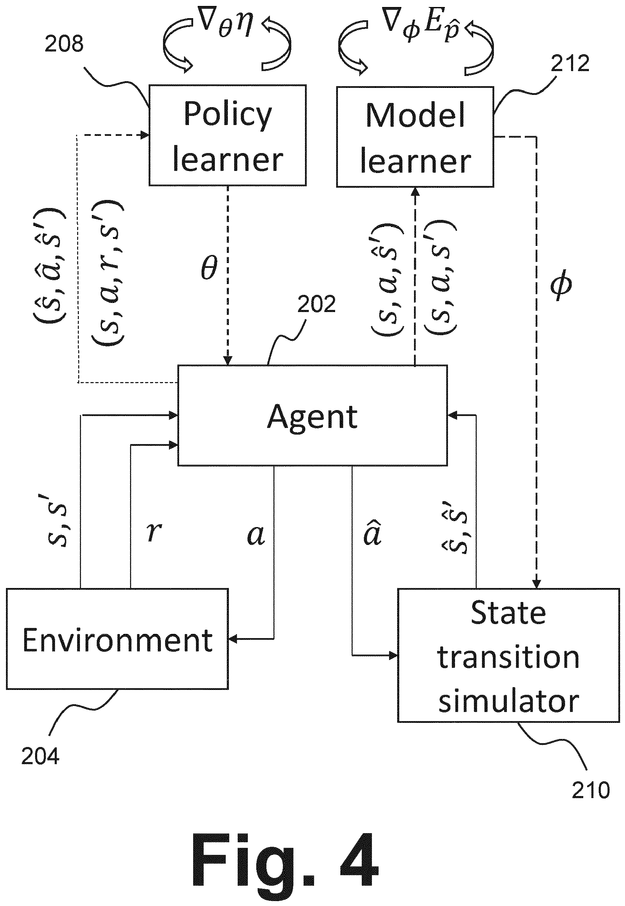

Figure 4 illustrates a further example of a reinforcement learning loop performed by the reinforcement learning system 200. In this example, the agent 202 interacts with the environment 204 and the state transition simulator 216 as described above with reference to Figure 3. The policy learner 214 processes empirical state transition data and simulated state transition data to generate policy updates. In the present example, the model learner 218 processes observed state transitions ($s,a,s'$) and corresponding simulated state transitions ($s,a,\hat{s}'$) generated by the state transition simulator 216 to determine updated values of the parameters $\phi$ of the state transition model. After the model learner 218 has updated the values of the parameters $\phi$, the policy learner 214 updates the value of the weighting parameter $\alpha$, such that the component of the objective function depending on the simulated state transition data has a greater influence on subsequent policy updates. In the present example, the policy learner 214 increases the value of the weighting parameter $\alpha$ according to a predetermined schedule.

In accordance with examples of the present invention, policy updates are determined on the basis of an objective function formed of two components. The first component corresponds to an expected value of the policy as estimated using empirical state transition data, and the second component corresponds to an expected value of the policy as estimated using simulated state transition data. In some examples, each of the components further depends on empirical reward data indicative of rewards associated with the empirical state transition data. In a specific example, a generalised advantage estimation (GAE) critic is used as described in the article "High Dimensional Continuous Control using Generalized Advantage Estimation" by Schulman et al, ICLR 2016 to estimate the advantage $A^{\pi,p}(s,a)$ appearing in Equations (4) and (6). The generalised advantage estimation critic $\hat{A}_t$ is given by Equation (8):

$$\hat{A}_t = \sum_{l=0}^{\infty} (\gamma\lambda)^l \delta^V_{t+l}, \tag{8}$$

where $\delta_t^V = r_t + \gamma V(s_{t+1}) - V(s_t)$ is the temporal difference (TD) residual of an approximate value function $V$ with discount factor $\gamma$, and $\lambda \in [0,1]$ is a parameter. The approximate value function $V$ may be implemented, for example, using a neural network, which is learned alongside the policy on the basis of empirical reward data indicating rewards received when the agent 202 interacts with the environment 204, for example using a Monte Carlo or TD(1) approach or similar. In a specific example, updates of the approximate value function $V$ are regularised using the $L_2$ divergence between the updated and previous values of the approximate value function. This helps to avoid overfitting the approximate value function to the most recent batch of transitions. Constraining the policy update in this way is referred to as trust region policy optimisation (TRPO). By updating the approximate value function using empirical reward data (as opposed to simulated reward data), the estimator $\hat{A}_t$ for the advantage function, and hence the resulting estimate of each component of the objective function $J_\pi^\alpha(\tilde{\pi})$, also depends on the empirical reward data. This approach limits the bias introduced by using simulated state transition data, whilst still allowing for reduced variance of policy updates and improved data efficiency.

The implementation described above, in which a GAE critic is used in conjunction with TRPO, provides a practicable method of determining policy updates, and is suitable for determining estimates of an objective function in accordance with the present invention. It is noted, however, that the applicability of the present invention is not limited to the implementations described herein. The present invention may be applied using other suitable reinforcement learning methods, for example other methods based on approximate policy iteration.

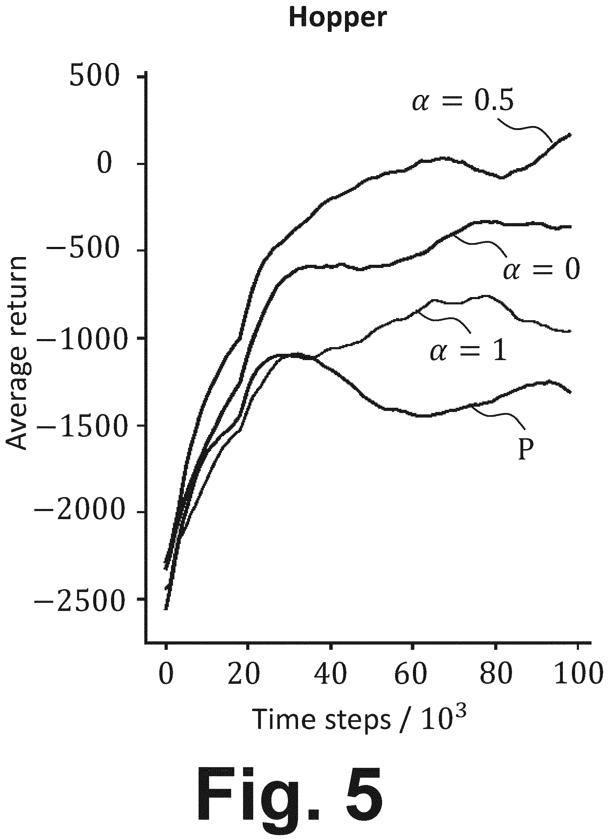

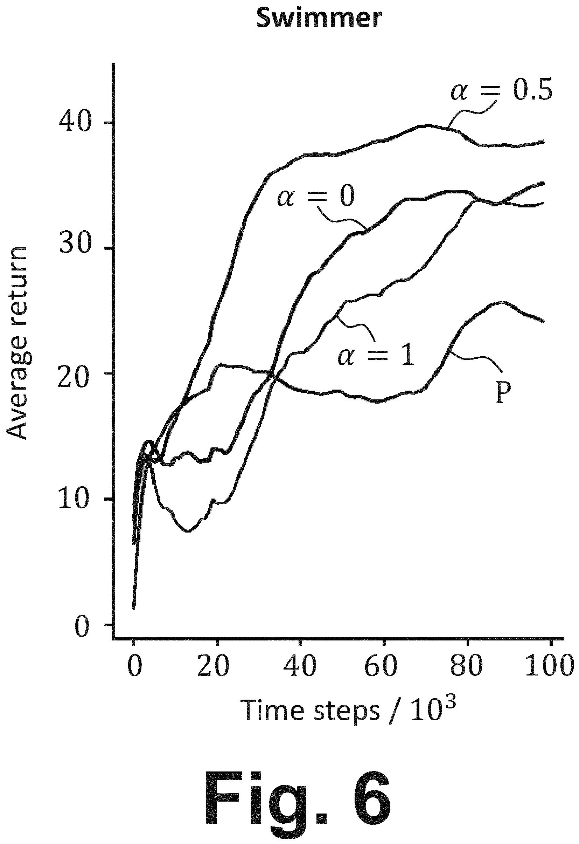

Figures 5 and 6 show learning curves from numerical experiments performed using the Hopper and Swimmer environments of the Mujoco physics simulator ("Mujoco: A physics engine for model-based control", Todorov et al, Proceedings of the IEEE/RSJ International Conference on Intelligent Robots and Systems 2012). In this example, a state transition model consisting of an ensemble of five neural networks with a common architecture comprising two hidden layers and 128 hidden units was trained by initialising each network with respective different initial parameter values and updating the networks independently by sampling mini-batches of empirical state transition data and minimising respective prediction errors for the networks. Rollouts of simulated state transitions were then generated using the state transition model and an agent following a policy implemented using an ensemble of five neural networks each having two hidden layers and 64 hidden units, tanh activations and a heteroscedastic Gaussian distribution over actions. For each simulated state transition, one of the trained networks was selected at random in order to mitigate bias introduced by any one of the networks. The policy of the agent was updated according using four different schemes:

1. conventional policy gradient (PG) as described in "Policy gradient methods for robotics", Peters and Schaal, IEEE International Conference on Intelligent Robots and Systems, 2006;

2. approximate policy iteration using the objective function $J_\pi^\alpha(\tilde{\pi})$ with $\alpha = 0$, corresponding to the objective function $L^{\pi,p}(\tilde{\pi})$ of Equation (4);

3. approximate policy iteration using the objective function $J_\pi^\alpha(\tilde{\pi})$ with $\alpha = 1$, corresponding to the objective function $L^{\pi,\hat{p}}(\tilde{\pi})$ of Equation (6); and

4. approximate policy iteration using the objective function $J_\pi^\alpha(\tilde{\pi})$ with $\alpha = 0.5$.

In cases 2-4 above, a TRPO update scheme was employed using a GAE critic, and learning curve results were averaged over 8 seeds. The graphs show the average return for an episode as a function of the number of time steps. In both experiments, it is observed that approximate policy iteration outperforms the conventional policy gradient method. Using entirely simulated state transition data ($\alpha = 1$) results in poorer performance than using entirely empirical state transition data ($\alpha = 0$) due to the bias introduced by the approximate state transition model. However, it is observed that performing policy updates using an equal mixture of simulated state transition data and empirical state transition data ($\alpha = 0.5$) results in better performance than using either data alone. By setting an appropriate weighting of empirical state transition data and simulated state transition data, the detrimental effects of high variance and high bias are both mitigated, resulting in improved performance by the agent.

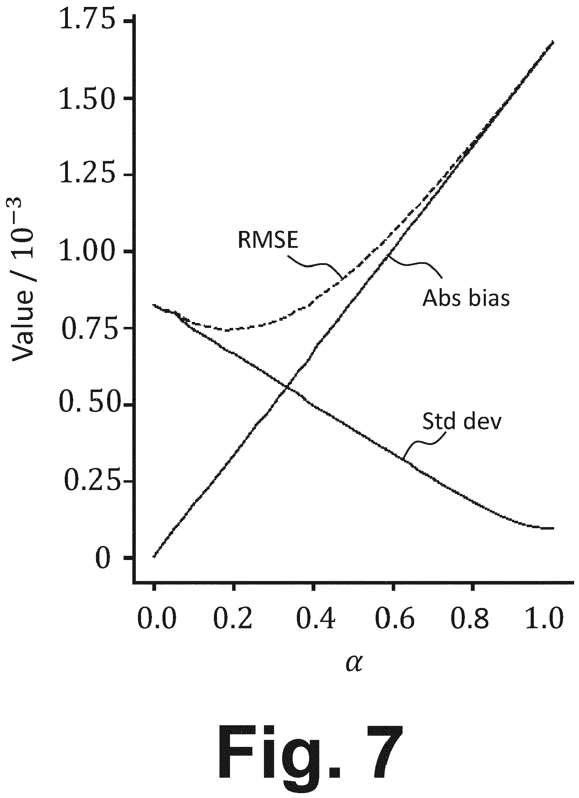

Figure 7 illustrates the effect of varying the weighting parameter $\alpha$ on the variance, bias and root mean squared error (RMSE) of stochastic estimates of the gradient $\nabla_\theta J_\pi^\alpha(\tilde{\pi})$ for a simple environment with known state transition probabilities. In order to mimic the situation where the number of available interactions with the environment is limited, a relatively high number of samples was used to estimate the component $L^{\pi,\hat{p}}(\tilde{\pi})$ and a relatively low number of samples was to estimate the component $L^{\pi,p}(\tilde{\pi})$. It is observed that increasing $\alpha$ decreases the standard deviation of the gradient estimates, but increases the bias of the gradient estimates. In this example, the optimal value of $\alpha$ for accurate gradient estimates (i.e. having the lowest RMSE) is around $\alpha = 0.2$. For a more accurate state transition model, the optimal value of $\alpha$ would be higher, which justifies an implementation in which $\alpha$ is increased as the state transition model is refined and improved.

The above embodiments are to be understood as illustrative examples of the invention. Further embodiments of the invention are envisaged. For example, one or more of the hardware components of the reinforcement learning system 200 described above may alternatively be implemented using software running on one or more processors, for example a central processing unit (CPU), a graphics processing unit (GPU), a neural network accelerator or other specialist processor, or a combination thereof, either within a single computing device or as part of a distributed computing system. In some examples, a reinforcement learning system is distributed according to a client-server model, for example with the model learner and policy learner implemented using one or more servers and with the agent and state transition simulator implemented as a remote client system. Such arrangements take advantage of the asynchronous data processing by the agent and the learners, allowing for efficient interactions between the agent and the environment whilst allowing the more computationally expensive and time-consuming learning processes to take place at the server system.

In some examples, a reinforcement learning system includes separate instances of the agent for interacting with the environment and the state transition simulator respectively. In an example of a client-server arrangement, one instance of the agent is located within the server system, along with the model learner, the policy learner, and the state transition simulator. A second instance of the agent is located within the client system. In this way, the majority of the computing burden is taken by the server system, whilst the client system can be located conveniently for interactions between the agent and the environment.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

**Claims**

1. A reinforcement learning system comprising:

   an agent arranged to generate empirical state transition data indicating observed changes of state of an environment induced by actions determined by the agent in accordance with a policy;
   a state transition simulator arranged to generate, using a state transition model, simulated state transition data indicating simulated changes of state of the environment on the basis of actions determined in accordance with the policy; and
   a policy learner arranged to:

   determine a policy update which, when used to update the policy, increases an objective function comprising a weighted sum of two components, the first component corresponding to a value of the updated policy as estimated using the empirical state transition data, and the second component corresponding to a value of the updated policy as estimated using the simulated state transition data; and
   update the policy in accordance with the determined policy update.

2. The reinforcement learning system of claim 1, further comprising a model learner arranged to process the empirical state transition data to update the state transition model.

3. The reinforcement learning system of claim 2, wherein processing the empirical state transition data comprises:

   comparing one or more of the observed changes of state of the environment with a corresponding one or more of the simulated changes of state of the environment; and
   updating the state transition model to reduce a prediction error associated with the comparison of the observed changes of state with the corresponding simulated changes of state of the environment.

4. The reinforcement learning system of claim 2 or 3, wherein the policy update is a first policy update, and wherein the policy learner is arranged to:

determine a second policy update subsequent to the first policy update and the updating of the state transition model; and

further update the policy in accordance with the determined second policy update, wherein the weighting of the two components of the objective function for the second policy update is different from the weighting of the two components of the objective function for the first policy update.

5. The reinforcement learning system of claim 4, wherein the policy learner is arranged to perform a sequence of iterative policy updates in which the weighting of the two components of the objective function is varied in accordance with a predetermined schedule.

6. The reinforcement learning system of any preceding claim, wherein the environment is a physical environment and wherein the agent is operable to:

receive, from a physical entity comprising one or more sensors and one or more actuators, state observation data indicating an observation of a state of the environment, the observation of the environment comprising one or more characteristics of the environment determined using the one or more sensors; and

transmit, to the physical entity, a control signal indicating a determined action for the physical entity to perform using the one or more actuators, thereby to induce a change of state of the environment.

7. The reinforcement learning system of any preceding claim, wherein each of the components of the objective function further depends on empirical reward data indicative of empirical rewards associated with the empirical state transition data.

8. The reinforcement learning system of any preceding claim, wherein the objective function is given by:

$$J_\pi^\alpha(\tilde{\pi}) = (1-\alpha)L^{\pi,p}(\tilde{\pi}) + \alpha L^{\pi,\hat{p}}(\tilde{\pi}),$$

wherein:

$L^{\pi,p}(\tilde{\pi})$ is the first component of the objective function, corresponding to a value of an updated policy $\tilde{\pi}$ when updating the policy $\pi$ to the updated policy $\tilde{\pi}$, as estimated using the empirical state transition data;
$L^{\pi,\hat{p}}(\tilde{\pi})$ is the second component of the objective function, corresponding to a value of the updated policy $\tilde{\pi}$ when updating the policy $\pi$ to the updated policy $\tilde{\pi}$, as estimated using the empirical state transition data;
$\alpha \in (0,1)$ is a parameter controlling the weighting of the two components of the objective function.

9. The reinforcement learning system of claim 8, wherein the first component of the objective function is given by:

$$L^{\pi,p}(\tilde{\pi}) = \mathop{\mathbb{E}}_{s\sim d^{\pi,p}, a\sim\pi(\cdot|s)} \frac{\tilde{\pi}(a|s)}{\pi(a|s)} A^{\pi,p}(s,a) ;$$

and the second component of the objective function is given by:

$$L^{\pi,\hat{p}}(\tilde{\pi}) = \mathop{\mathbb{E}}_{s\sim d^{\pi,\hat{p}}, a\sim\pi(\cdot|s)} \frac{\tilde{\pi}(a|s)}{\pi(a|s)} A^{\pi,p}(s,a) ;$$

wherein:

$d^{\pi,p}$ is a state occupancy measure corresponding to the empirical state transition data;
$d^{\pi,\hat{p}}$ is a state occupancy measure corresponding to the empirical state transition data; and
$A^{\pi,p}(s,a)$ is an advantage function estimated on the basis of empirical reward data indicative of empirical rewards associated with the empirical state transition data.

10. The method of claim 9, wherein the policy learner is arranged to estimate the advantage function $A^{\pi,p}(s,a)$ using a generalised advantage estimation critic.

**11.** The reinforcement learning system of any preceding claim, wherein the policy learner and model learner are implemented within a server system, and wherein the agent and the state transition simulator are implemented within a client system remote from the server system.

**12.** A computer-implemented method of updating a policy for a reinforcement learning agent interacting with an environment, the method comprising:

receiving empirical state transition data indicative of observed changes of state of the environment induced by actions determined by the agent in accordance with the policy;
receiving simulated state transition data indicative of simulated changes of state of the environment determined using a state transition model on the basis of actions determined in accordance with the policy; and
determining a policy update which, when used to update the policy, increases an objective function comprising a weighted sum of two components, the first component corresponding to a value of the updated policy as estimated using the empirical state transition data, and the second component corresponding to a value of the updated policy as estimated using the simulated state transition data; and
updating the policy in accordance with the determined policy update.

**13.** A non-transitory storage medium comprising computer-readable instructions which, when executed by a computer, cause the computer to perform the method of claim 12.

**Fig. 1**

200

# Fig. 2

**Fig. 3**

**Fig. 4**

**Hopper**

Fig. 5

Swimmer

Fig. 6

**Fig. 7**

Europäisches
Patentamt

European
Patent Office

Office européen
des brevets

# EUROPEAN SEARCH REPORT

Application Number

EP 19 21 8351

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Qingpeng Cai ET AL: "Deterministic Policy Gradients With General State Transitions", , 2 October 2018 (2018-10-02), XP055706982, Retrieved from the Internet: URL:https://arxiv.org/pdf/1807.03708.pdf [retrieved on 2020-06-19] * abstract * * page 2 - page 3 * * page 7 - page 10 * * Algorithm 1; page 12 - page 13 * | 1-13 | INV. G06N3/00 G06N3/04 G06N3/08 |
| A | FEIYANG PAN ET AL: "Policy Optimization with Model-based Explorations", ARXIV.ORG, CORNELL UNIVERSITY LIBRARY, 201 OLIN LIBRARY CORNELL UNIVERSITY ITHACA, NY 14853, 18 November 2018 (2018-11-18), XP080936260, * the whole document * | 1-13 | |
| A | John Schulman ET AL: "Proximal Policy Optimization Algorithms", , 28 August 2017 (2017-08-28), XP055574000, Retrieved from the Internet: URL:https://arxiv.org/pdf/1707.06347.pdf [retrieved on 2019-03-25] * the whole document * | 1-13 | TECHNICAL FIELDS SEARCHED (IPC) G06N |
| A | Michael Janner ET AL: "When to Trust Your Model: Model-Based Policy Optimization", , 5 November 2019 (2019-11-05), XP055706612, Retrieved from the Internet: URL:https://arxiv.org/pdf/1906.08253.pdf [retrieved on 2020-06-18] * the whole document * | 1-13 | |

The present search report has been drawn up for all claims

| Place of search | Date of completion of the search | Examiner |
|---|---|---|
| The Hague | 23 June 2020 | Tsakonas, Athanasios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- High Dimensional Continuous Control using Generalized Advantage Estimation. **SCHULMAN et al.** ICLR. 2016
- **SCHULMAN et al.** High Dimensional Continuous Control using Generalized Advantage Estimation. *ICLR,* 2016
- **TODOROV et al.** Mujoco: A physics engine for model-based control. *Proceedings of the IEEE/RSJ International Conference on Intelligent Robots and Systems,* 2012
- **PETERS ; SCHAAL.** Policy gradient methods for robotics. *IEEE International Conference on Intelligent Robots and Systems,* 2006